# EUROPEAN PATENT APPLICATION

(11) **EP 3 007 491 A1**
(43) Date of publication of application: **13.04.2016**
(21) Application number: 14803580.1
(22) Date of filing: 27.05.2014
(51) Int. Cl.: H04W 36/22, H04W 36/14, H04W 48/18

(54) **BASE STATION, USER DEVICE, CONGESTION STATUS NOTIFICATION CONTROL METHOD, AND SWITCH CONTROL METHOD**

(30) Priority: 31.05.2013 JP 2013116427
(71) Applicant: NTT DOCOMO, INC., Chiyoda-ku Tokyo 100-6150 (JP)
(72) Inventor: UCHINO, Tooru, Tokyo 100-6150 (JP); TAKAHASHI, Hideaki, Tokyo 100-6150 (JP); HAPSARI, Wuri Andarmawanti, Tokyo 100-6150 (JP)
(74) Representative: Hoffmann Eitle
(86) International application number: PCT/JP2014/063985
(87) International publication number: WO 2014/192749

(57) **Abstract**

A base station for performing communication with a user apparatus that includes a function for switching connection between a first radio communication network and a second radio communication network, including: a group management unit configured to group a plurality of user apparatuses located in an area of the base station into a plurality of groups; and a notification control unit configured to transmit congestion state information indicating a congestion state in the first radio communication network for each group that is grouped by the group management unit, and to cause each group to perform connection switching between the first radio communication network and the second radio communication network.

## Description

### TECHNICAL FIELD

The present invention relates to a user apparatus and a base station in a mobile communication system. More particularly, the present invention relates to a technique for switching from communication using a radio communication network to communication using another radio communication network.

### BACKGROUND ART

With the recent spread of smartphones, it is being studied to efficiently offload user data from a cellular network (example: LTE, 3G) to a radio LAN network (example: WiFi (registered trade mark)) side.

Currently, as a coordination method between the cellular network and the radio LAN network, there is coordination in a core network (CN) level, for example. Also, coordination methods in a radio access network (RAN) level are being studied for performing coordination more dynamically.

Currently, as one of Study Items in 3GPP Rel-12, WiFi interworking is being considered (non-patent document 1: RP-122038)

### RELATED ART DOCUMENT

### [NON-PATENT DOCUMENT]

Non-Patent Document 1: 3GPP TSG-RAN Meeting #58,RP-122038, Barcelona, Spain, 4-7 December, 2012

### SUMMARY OF THE INVENTION

### PROBLEM TO BE SOLVED BY THE INVENTION

As one of the above-mentioned coordination controls, it is being studied to perform load balancing between a radio LAN network and a cellular network by notifying user apparatuses UE of a congestion state in the cellular network side.

However, in a case where the congestion state is notified to every connected user apparatus UE, a large number of user apparatuses UE simultaneously switches to the radio LAN network side or to the cellular network side. Therefore, there is a problem in that the transition destination becomes congested so that offload cannot be performed. This problem is called mass toggle problem.

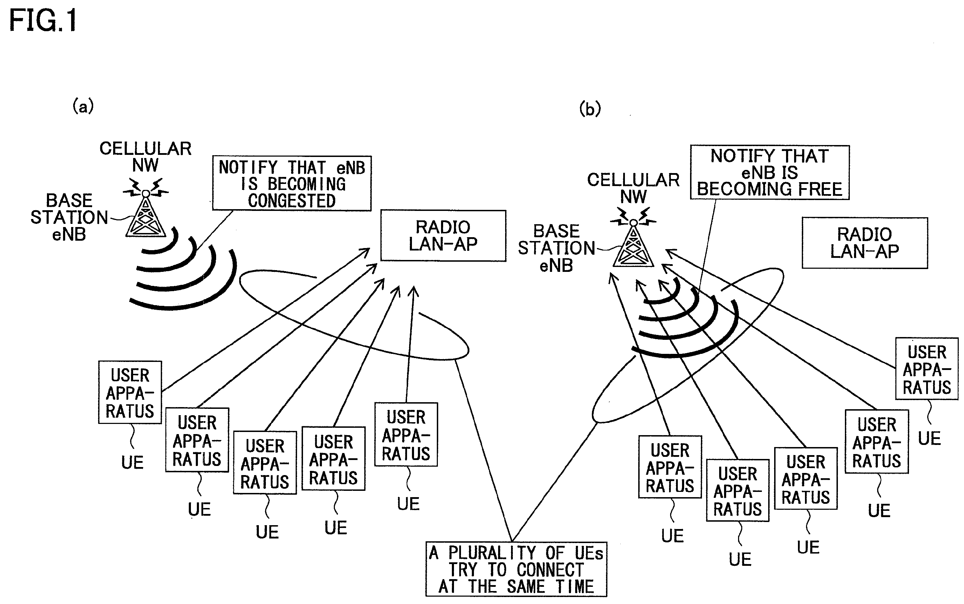

For example, in a state where a plurality of user apparatuses UE are connected to a cellular network initially, when the base station eNB notifies the user apparatuses UE that the base station eNB is becoming congested as shown in Fig. 1(a), the plurality of user apparatuses UE try to connect to a radio LAN network (WiFi router and the like). After that, in a state where the plurality of user apparatuses UE are connected to the radio LAN network, when the base station eNB notifies the user apparatus UE that the base station eNB is becoming free as shown in Fig. 1(b), the plurality of user apparatuses try to connect to the cellular network this time.

The present invention is contrived in view of the above-points, and an object of the present invention is to avoid that a plurality of user apparatuses simultaneously perform switching in a technique in which user apparatuses perform connection switching between a plurality of radio communication networks.

### MEANS FOR SOLVING THE PROBLEM

For solving the above-mentioned problem, according to an embodiment of the present invention, there is provided a base station for performing communication with a user apparatus that includes a function for switching connection between a first radio communication network and a second radio communication network, including:
a group management unit configured to group a plurality of user apparatuses located in an area of the base station into a plurality of groups; and
a notification control unit configured to transmit congestion state information indicating a congestion state in the first radio communication network for each group that is grouped by the group management unit, and to cause each group to perform connection switching between the first radio communication network and the second radio communication network.

Also, according to an embodiment of the present invention, there is provided a user apparatus that includes a function for performing connection switching between a first radio communication network and a second radio communication network, including:
a congestion state management unit configure to receive, from the first radio communication network or the second radio communication network, a first congestion level indicating a congestion level of the first radio communication network and a second congestion level indicating a congestion level of the second radio communication network; and
a switch control unit configured to hold a first threshold on the first congestion level and a second threshold on the second congestion level, compare the first threshold adjusted by a predetermined first threshold adjusting value with the first congestion level, and compare the second threshold adjusted by a predetermined second threshold adjusting value with the second congestion level, so as to determine whether to perform connection switching between the first radio communication network and the second radio communication network.

Further, according to an embodiment of the present invention, there is provided a user apparatus that includes a function for performing connection switching between a first radio communication network and a second radio communication network, including:
a congestion state management unit configure to receive, from the first radio communication network or the second radio communication network, a first congestion level indicating a congestion level of the first radio communication network and a second congestion level indicating a congestion level of the second radio communication network; and
a switch control unit configured to compare a predetermined first threshold with the first congestion level, and compare a predetermined second threshold with the second congestion level, so as to perform connection switching between the first radio communication network and the second radio communication network when determining that a condition to perform the connection switching is satisfied and when the condition continues for a predetermined period.

### EFFECT OF THE PRESENT INVENTION

According to an embodiment of the present invention, it becomes possible to avoid that a plurality of user apparatuses simultaneously perform switching in a technique in which user apparatuses perform connection switching between a plurality of radio communication networks.

### BRIEF DESCRIPTION OF THE DRAWINGS

Fig. 1 is a diagram for describing a problem;
Fig. 2 is a system block diagram in an embodiment of the present invention;
Fig. 3 is a diagram showing an outline of a first embodiment;
Fig. 4 is a diagram showing an example of a notification method when transmitting a congestion state for each group;
Fig. 5 is a functional block diagram of a base station eNB in the first embodiment;
Fig. 6 is a flowchart showing an operation example of the base station eNB in the first embodiment;
Fig. 7 is a flowchart showing another operation example of the base station eNB in the first embodiment;
Fig. 8 is a functional block diagram of a base station eNB in a second embodiment;
Fig. 9 is a functional block diagram of a user apparatus UE in the second embodiment;
Fig. 10 is a flowchart showing an operation example of the user apparatus UE in the second embodiment.

### EMBODIMENTS FOR CARRYING OUT THE INVENTION

In the following, embodiments of the present invention are described with reference to figures. The embodiments described below are merely examples, and the embodiments to which the present invention is applied are not limited to the embodiments below. For example, although the present embodiment is targeted for switching between a cellular network and a radio LAN network, the present invention can be applied to switching between arbitrary radio communication networks other than switching between a cellular network and a radio LAN network. Also, the number of radio communication networks that become switching targets may be equal to or greater than 2.

Also, although the cellular network in the present embodiment is assumed to be a cellular network complying with LTE, the cellular network is not limited to LTE, and it may be 3G, for example. In the specification and claims, "LTE" is used as having meaning of not only communication schemes corresponding to release 8 or 9 of 3GPP but also communication schemes corresponding to release 10, 11, or 12 of 3GPP.

### (Outline)

In the present embodiment, user apparatuses UE are caused to gradually switch to a radio LAN network side/a cellular network side. More particularly, there are a first embodiment and a second embodiment. In the first embodiment, instead of performing signaling to user apparatuses UE simultaneously from the cellular network, signaling is gradually performed for each individual user apparatus UE or by grouping user apparatuses UE so that the user apparatuses UE are gradually shifted to the radio LAN network side/the cellular network side.

In the second embodiment, a hysteresis of a threshold is set to user apparatuses UE individually or for each group, so that the user apparatuses UE start transition considering the hysteresis when receiving information of a congestion state and the like from the radio LAN network/cellular network. Since individual user apparatuses UE perform transition considering respective hysteresis, user apparatuses UE can be caused to gradually switch to the radio LAN network side/the cellular network side. In the following, the first embodiment and the second embodiment are described in more detail.

### (First embodiment)

First, the first embodiment is described.

### <Whole system configuration, process content and the like>

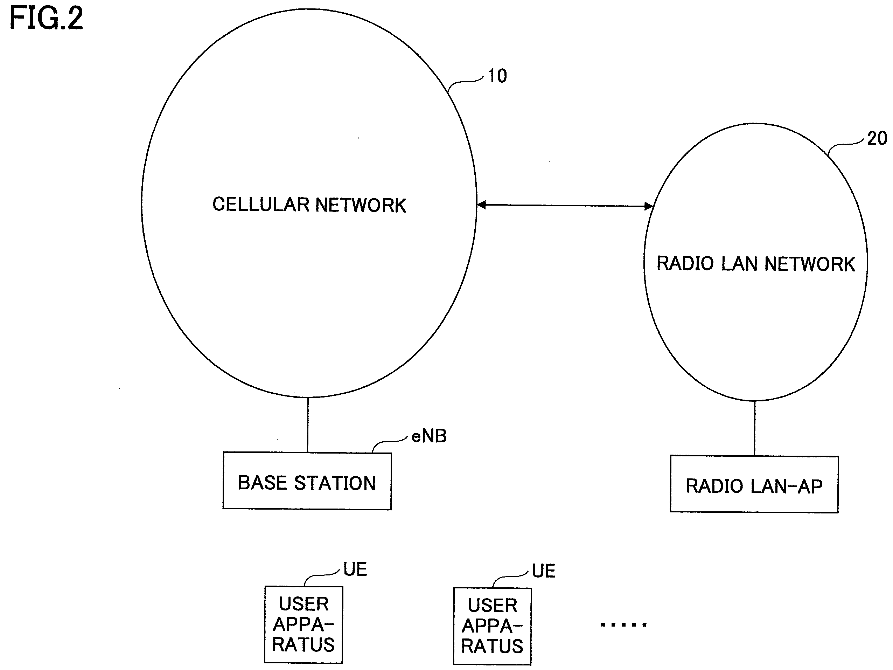

Fig. 2 shows a system block diagram in the present embodiment. As shown in Fig. 2, the system of the present embodiment includes a cellular network including a base station eNB, and a radio LAN network 20 including a radio LAN-AP. The cellular network 10 and the radio LAN network 20 are connected, so that the base station eNB can communicate with the radio LAN-AP.

There are a plurality of user apparatuses UE under the base station eNB and the radio LAN-AP, and each user apparatus UE has a function of connecting to (switching to) the base station eNB or the radio LAN-AP based on congestion state information included in a control signal (signaling) transmitted from the base station eNB. That is, each user apparatus UE includes a first radio communication unit configured to perform communication using a first radio communication network (example: cellular network) and a second radio communication unit configured to perform communication using a second radio communication network (example: radio LAN network), and includes a function for performing connection switching between the first radio communication network and the second radio communication network based on congestion state information received from the base station eNB.

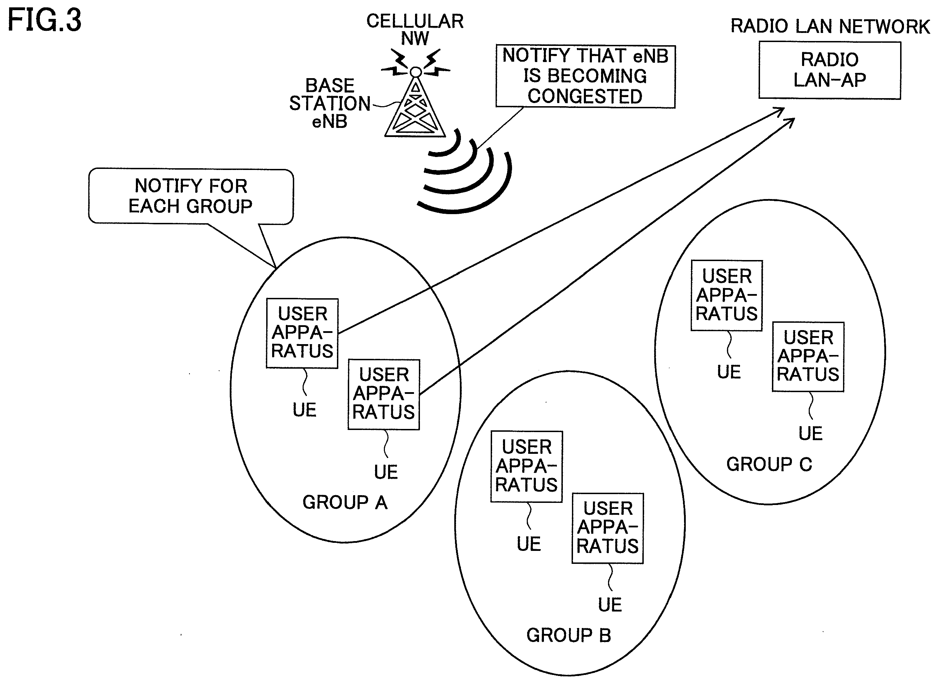

In the present embodiment, as shown in Fig. 3, for example, the base station eNB divides connected user apparatuses UE into groups each including one or a plurality of user apparatuses UE, and gradually notifies the user apparatuses UE, for each group (including notifying individually), of a congestion state so as to cause the user apparatuses UE to perform transition gradually.

As a method for notification, it may be a UE-specific signaling such as RRC signaling, MAC signaling and the like. Also, a special RNTI(Radio Network Temporary ID) may be assigned to user apparatuses UE for each group so as to perform notification by using the RNTI. RNTI is an ID that is temporarily given for control. For example, the base station eNB groups user apparatuses UE under the control of the base station eNB into groups A, B, C ..., for example, and assigns RNTI-A, RNTI-B, RNTI-C .... to each user apparatus UE of the respective groups by individual signaling. Then, when the base station eNB wants to cause the user apparatuses UE of the group A, for example, to perform transition, the base station eNB transmits a control signal including RNTI-A to user apparatuses UE. The same RNTI may be prepared for every user apparatus UE, and notification information specific for each group may be prepared. In this case, for example, a type of notification information (example: type of SIB) that should be read is notified to each user apparatus for each group, so that each user apparatus UE extracts information indicating congestion (or free) from notification information when receiving the notification information that should be read.

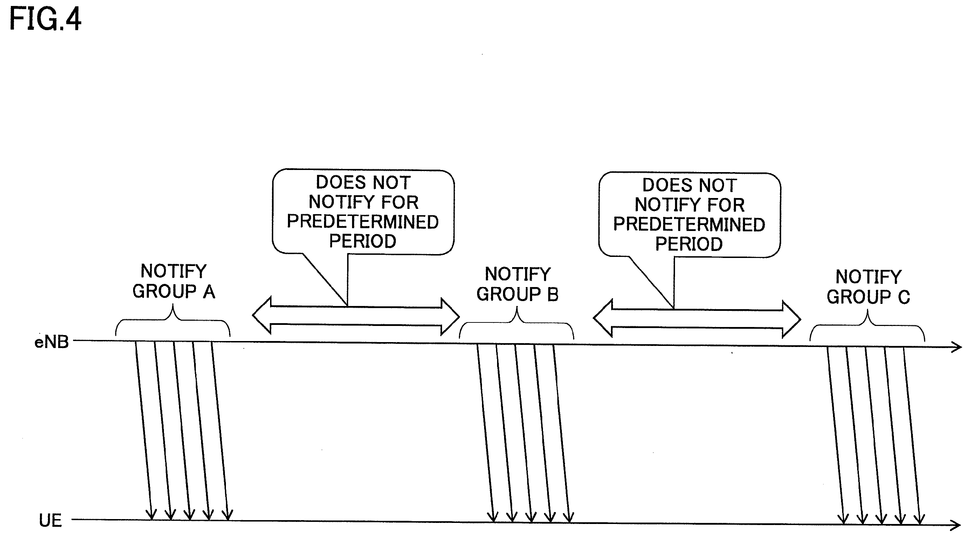

Fig. 4 shows an example of a notification method when transmitting a congestion state for each group. As shown in Fig. 4, when a predetermined condition is satisfied, the base station eNB performs notification to group A, first, and when the condition is satisfied again, the base station eNB performs notification to group B after a predetermined period elapses, and further, when the condition is satisfied, the base station eNB performs notification to group C after a predetermined period elapses.

### <Signaling start trigger, stop trigger>

In the present embodiment, there are following case 1 and case 2 as a trigger by which the base station eNB performs signaling to notify user apparatuses UE of a congestion state, and a trigger by which the base station eNB stops the signaling.

### (1) Case 1

### <Starting trigger>

Case 1 is a case in which the base station eNB in the cellular network notifies that the base station eNB is congested. The base station eNB compares a congestion level (to be referred to as a congestion level of the base station eNB) in the cellular network with a predetermined threshold, and, when the base station eNB determines that the congestion level exceeds the predetermined threshold, the base station eNB notifies user apparatuses UE of congestion state information indicating that the base station eNB is congested.

The congestion state information in the present embodiment may be a numerical value corresponding to the congestion level, or may be arbitrary information that indicates being congested/being free. The present embodiment can be used by combining with an after-mentioned second embodiment. In such a case, congestion state information to be notified to the user apparatus UE is a value of a congestion level that can be compared with threshold and the like in the second embodiment.

The congestion level is, for example, the number of user apparatuses UE in RRC connected state, the number of bearers that are established, Non-DRX ratio (ratio of user apparatuses UE that are not in DRX (discontinuous reception) state), the setting number of UL individual resource (the number of user apparatuses UE to which UL individual resource is assigned), or the like. The congestion level is not limited to these, and any value may be used as long as it indicates a state of congestion. For example, the congestion level may be determined by using not only information on UE in the base station eNB but also information received from an apparatus in the cellular network.

Also, the radio LAN-AP may notify, via a cellular network (core network), the base station eNB of a congestion level of the radio LAN network that is determined based on the number of connected user apparatuses UE and resource use status and the like, so that the base station eNB may determine whether to perform notification of congestion state information by considering the congestion level. For example, a control can be performed in which, even when the base station eNB is congested, when the congestion level received from the radio LAN-AP is equal to or greater than a threshold, the base station eNB does not perform notification of congestion state information to user apparatuses UE.

### <Trigger for stopping>

After starting notification of congestion state information, while the above-mentioned condition is satisfied, the base station eNB performs notification of congestion state information to each group for every predetermined period, for example. When the base station eNB determines that the congestion level falls below a predetermined threshold, the base station eNB stops notification of congestion state information to user apparatuses UE. A concrete value of the congestion level is similar to that for the starting trigger. Also, the predetermined threshold for stopping may be the same as or different from the predetermined threshold for the start trigger.

Also, like the starting trigger, the base station eNB may determine whether to stop notification by considering a congestion level of the radio LAN network side received from the radio LAN-AP via the core network.

Also, for example, the user apparatus UE may be provided with a function for notifying the base station eNB that the user apparatus UE performs transition when the user apparatus UE performs transition from the cellular network to the radio LAN network, so that, when the number of the user apparatuses UE that perform transition from the cellular network to the radio LAN network becomes a predetermined threshold, the base station eNB may determine that further offload to the radio LAN network side cannot be performed, and stop notification of congestion state information to user apparatuses UE.

### (2) Case 2

Case 2 is a case in which the base station eNB performs notification/stops notification to user apparatuses UE of congestion state information indicating that the base station eNB is becoming free (not congested).

### <Trigger for starting>

In case 2, the base station eNB compares a congestion level with a predetermined threshold, and, when the base station eNB determines that the congestion level falls below a predetermined threshold, the base station eNB notifies user apparatuses UE of congestion state information indicating that the base station eNB is becoming free (not congested). The predetermined threshold used here may be the same as that in case 1, or may be different from that in case 1. For example, a threshold smaller than that in case 1 may be used.

Similarly to case 1, the congestion level is, for example, the number of user apparatuses UE in RRC connected state, the number of bearers that are established, Non-DRX ratio (ratio of user apparatuses UE that are not in DRX (discontinuous reception) state), the setting number of UL individual resource (the number of user apparatuses UE to which UL individual resource is assigned), or the like.

Also, the radio LAN-AP may notify, via the cellular network (core network), the base station eNB of a congestion level that is determined based on the number of connected user apparatuses UE and resource use status and the like, so that the base station eNB may determine whether to perform notification of congestion state information by considering the congestion level. For example, a control can be performed in which, even when the base station eNB is free, when the congestion level received from the radio LAN-AP is equal to or less than a threshold, the base station eNB does not perform notification to user apparatuses UE.

### <Trigger for stopping>

After starting notification of congestion state information, while the above-mentioned condition is satisfied, the base station eNB performs notification of congestion state information to each group for every predetermined period, for example. When the base station eNB determines that the congestion level exceeds a predetermined threshold, the base station eNB stops notification of congestion state information to user apparatuses UE. A concrete value of the congestion level is similar to that for the starting trigger. Also, the predetermined threshold for stopping may be the same as or different from the predetermined threshold for the start trigger.

Also, like the starting trigger, the base station eNB may determine whether to stop notification by considering a congestion level of the radio LAN network side received from the radio LAN-AP via the core network.

Also, for example, the user apparatus UE may be provided with a function for notifying the base station eNB that the user apparatus UE performs transition when the user apparatus UE performs transition from the radio LAN network to the cellular network, so that, when the number of the user apparatuses UE that has performed transition from the radio LAN network to the cellular network becomes a predetermined threshold, the base station eNB may determine that further transition to the cellular network side cannot be performed, and stop notification of congestion state information to user apparatuses UE.

### <Notification priority control>

As described before, in the present embodiment, the base station eNB groups user apparatuses UE, under the control of the base station eNB, into groups, so as to transmit a congestion state for each group. One or a plurality of user apparatuses UE belong to a group. The grouping may be arbitrarily (randomly) performed by determining the number of user apparatuses UE for each group without providing any criterion, for example, or priority may be provided by a predetermined criterion so as to transmit congestion state information in an order of priority by grouping for each priority. There are following examples of priority.

### (1) Priority in consideration of buffer amount

The base station eNB groups user apparatuses UE based on a size of a buffer amount of downlink data of the user apparatuses UE or a size of a buffer amount of uplink data reported from the user apparatuses UE. For example, the user apparatuses UE are grouped into group 1, group 2, group 3, ...in descending order of the size of the buffer amount.

Then, when the cellular network is congested (corresponding to case 1), the base station eNB performs notification of congestion state information preferentially to a group of user apparatuses UE having a large buffer amount (from that group in order) so as to cause the group of user apparatuses UE to switch to the radio LAN network preferentially.

### (2) Priority by service (QoS)

The base station eNB groups user apparatuses UE based on service quality (QoS, which may be referred to as "priority") of services performed by the user apparatuses UE. For example, the user apparatuses UE are grouped into group 1, group 2, group 3, ...in descending order of the priority.

Then, the base station eNB performs notification of congestion state information preferentially to a group of user apparatuses UE performing a service of high priority so as to cause the group of the user apparatuses UE to switch to the radio LAN network preferentially.

### (3) Priority by connecting time

The base station eNB groups user apparatuses UE based on connecting time (example: time of RRCconnected state) of the user apparatuses UE. For example, the user apparatuses UE are grouped into group 1, group 2, group 3, ...in descending order of the length of the connecting time.

Then, the base station eNB performs notification of congestion state information preferentially to a group of user apparatuses UE of long connecting time so as to cause the group of the user apparatuses UE to switch to the radio LAN network side preferentially such that other user apparatuses UE of which the connecting time is not long can use more resources in the cellular network side.

### (4) Priority on penalty user (example: AMBR target UE, dynamic Low class target UE) and charging

The base station eNB classifies user apparatuses UE, that have become low priority due to transmission and reception of large amount of data in the cellular network side, into one or a plurality of groups of lower priory different from other user apparatuses UE. Then, the base station eNB transmits congestion state information preferentially to the user apparatuses UE of the low priority group so as to cause the user apparatuses UE to offload to the radio LAN network preferentially.

In contrast, in order to cause user apparatuses UE of high priority, that do not belong to the low priority group, to use more resources in the cellular network side, the base station eNB may preferentially notify the user apparatuses UE of high priority of congestion state information indicating that the cellular network is becoming free so as to cause the user apparatuses UE to switch from the radio LAN network to the cellular network preferentially.

### (5) Priority on battery

The base station eNB groups the user apparatuses UE based on a battery state of the user apparatuses UE. For example, the user apparatuses UE are grouped into group 1, group 2, group 3, ... in ascending order of battery remaining amount. For example, the battery remaining amount can be ascertained by receiving notification from the user apparatuses UE. Also, the base station eNB may estimate battery consumed amount (battery availability), battery remaining amount and the like based on capability (use bandwidth and the like), connecting time and the like of the user apparatuses UE so as to group user apparatuses UE in an order of necessity of less battery consumption as much as possible.

Then, the base station eNB performs notification of congestion state information preferentially to a group of user apparatuses UE of high necessity of less battery consumption so as to cause the group of the user apparatuses UE to switch to the radio LAN network preferentially. That is, since battery saving is possible by connecting to the radio LAN network for the user apparatuses UE, user apparatuses UE of short battery available time and user apparatuses UE that are estimated to have small battery remaining amount are caused to switch to the radio LAN network preferentially.

### <Apparatus configuration, process flow>

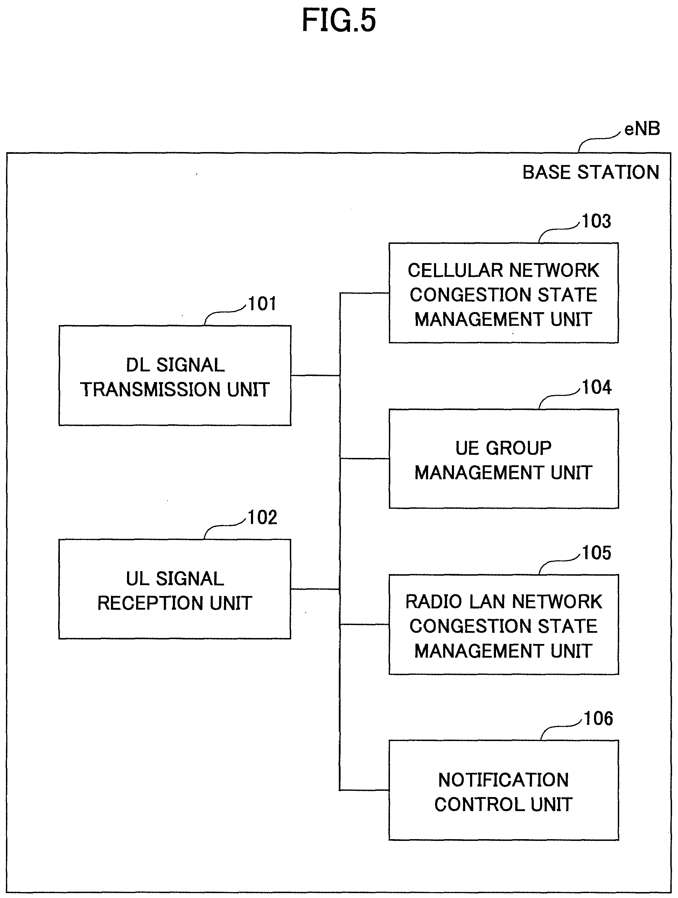

Fig. 5 shows a functional configuration example of the base station eNB of the present embodiment. As shown in Fig. 5, the base station eNB includes a DL signal transmission unit 101, an UL signal reception unit 102, a cellular network congestion state management unit 103, a UE group management unit 104, a radio LAN network congestion state management unit 105 and a notification control unit 106. Fig. 5 shows only functional units that are especially related to the embodiment of the present invention, and also includes at least functions, not shown in the figure, for performing operation complying with the communication scheme of the cellular network (example: LTE scheme).

The DL signal transmission unit 101 includes a function for generating various signals of physical layer from upper layer information to be transmitted from the base station eNB, and transmitting the various signals to user apparatuses UE. The UL signal reception unit 102 includes a function for receiving various uplink signals from user apparatuses UE, and obtaining upper layer information from the received physical layer signals.

The cellular network congestion state management unit 103 includes a functional unit configured to calculate a congestion level, and a storage unit configured to store the information of the congestion level. As described before, the congestion level is, for example, the number of user apparatuses UE in RRC connected state, the number of bearers that are established, Non-DRX ratio (ratio of user apparatuses UE that are not in DRX (discontinuous reception) state), the setting number of UL individual resource (the number of user apparatuses UE to which UL individual resource is assigned), or the like.

The radio LAN network congestion state management unit 105 includes a functional unit configured to receive a congestion level of the radio LAN network from the radio LAN network via a core network and the like, and a storage unit configured to store information of the congestion level.

The UE group management unit 104 includes a functional unit configured to group user apparatuses UE, that are located in an area of the base station eNB, arbitrarily or by the before-mentioned method based on priority, and includes a storage unit configured to assign identification information (example: RNTI) to the grouped user apparatuses UE and to store the identification information for each group. When performing grouping based on priority, identification indicating a group and priority may be associated with each other. For example, in a case where identification information is represented as a number, the smaller the number is set, the higher the priority is set. Also, the priority in this example may be a priority indicating a degree of necessity of switching from the cellular network to the radio LAN network, or may be a priority indicating a degree of necessity of not-switching from the cellular network to the radio LAN network. Then, the base station eNB performs notification of congestion state information to each group in an order of the number, for example.

The notification control unit 106 compares the congestion level of the cellular network stored in the storage unit of the cellular network congestion state management unit 103 with a predetermined threshold, and further, compares the congestion level of the radio LAN network stored in the storage unit of the radio LAN network congestion state management unit 105 with a predetermined threshold so as to perform control of transmitting congestion state information for each group of user apparatuses UE grouped in the UE group management unit 104.

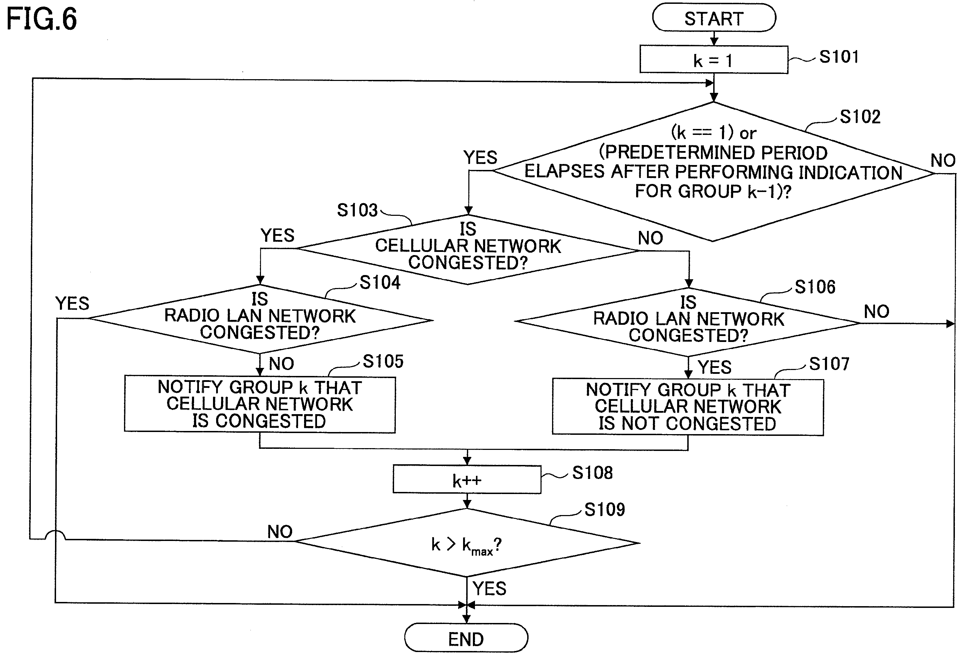

In the following, an operation example of the base station eNB configured as shown in Fig. 5 is described with reference to Fig. 6. The operation example shown in Fig. 6 is an example in which a congestion level in the radio LAN network is considered in addition to considering a congestion level in the cellular network. Also, in this example, as shown in Fig. 4, after a predetermined period expires after notifying a group of a congestion state, notification is performed to other group (as necessary), and Fig. 6 shows an operation example on notification of one time. In this example, user apparatuses UE are grouped into groups of group 1 - group kₘₐₓ.

First, the notification control unit 106 of the base station eNB sets k=1 to make group 1 to be a target (step 101). The notification control unit 106 determines whether k is 1, or whether a predetermined period has elapsed after performing notification to group k-1 (group of previous time) (step 102). When the determination result of step 102 is No, process of this time ends, and for example, determination of step 102 is performed again after a period of time.

In a case where the determination result in step 102 is Yes, the notification control unit 106 determines whether the cellular network is congested (step 103). In the example shown in Fig. 6, the notification control unit 106 obtains a congestion level of the cellular network from the cellular network congestion state management unit 103, compares the congestion level with a predetermined threshold, and determines that the cellular network is congested when the congestion level is equal to or greater than the predetermined threshold, and determines that the cellular network is not congested when the congestion level is not equal to or greater than the predetermined threshold.

Also, a threshold for determining that a network is not congested (is free) may be set to be smaller than a threshold for determining that the network is congested, and, the notification control unit 106 may determine that the network is not congested (is free) when the congestion level is smaller than the threshold. In this case, a state corresponding to neither of congested nor not-congested (free) may occur. In such a case, the process of this time may end and the process may return to step 102.

In a case where determination in step 103 is Yes, the cellular network is determined to be congested, and the process goes to step 104. In step 104, the notification control unit 106 determines whether the radio LAN network is congested. In this example, the notification control unit 106 obtains a congestion level of the radio LAN network from the radio LAN network congestion state management unit 105, compares the congestion level with a predetermined threshold, and determines whether the congestion level is equal to or greater than the predetermined threshold. If the determination result in step 104 is Yes, the process of this time ends, and when the determination result is No, the process goes to step 105.

In step 105, the notification control unit 106 notifies user apparatuses UE belonging to group k, via the DL signal transmission unit 101, of congestion state information indicating that the cellular network is congested. The user apparatuses UE belonging to group k that receive the information performs transition to the radio LAN network when the user apparatuses UE are connected to the cellular network.

When the determination in step 103 is No (when it is determined that the cellular network is not congested), the process goes to step 106. In step 106, the notification control unit 106 determines whether the radio LAN network is congested. In this example, the notification control unit 106 obtains a congestion level of the radio LAN network from the radio LAN network congestion state management unit 105, compares the congestion level with a predetermined threshold, and determines whether the congestion level is equal to or greater than the predetermined threshold. If the determination result in step 106 is No, the process of this time ends, and when the determination result is Yes, the process goes to step 107.

In step 107, the notification control unit 106 notifies user apparatuses UE belonging to group k of information indicating that the cellular network is not congested (or information indicating that the cellular network is free). The user apparatuses UE belonging to group k that receive the information performs transition to the cellular network if the user apparatuses UE are connected to the radio LAN network.

In step 108 following steps 105 and 107, k is incremented. If k exceeds kₘₐₓ (Yes in step 109), the process ends, and if k does not exceed kₘₐₓ (No in step 109), the process returns to step 102.

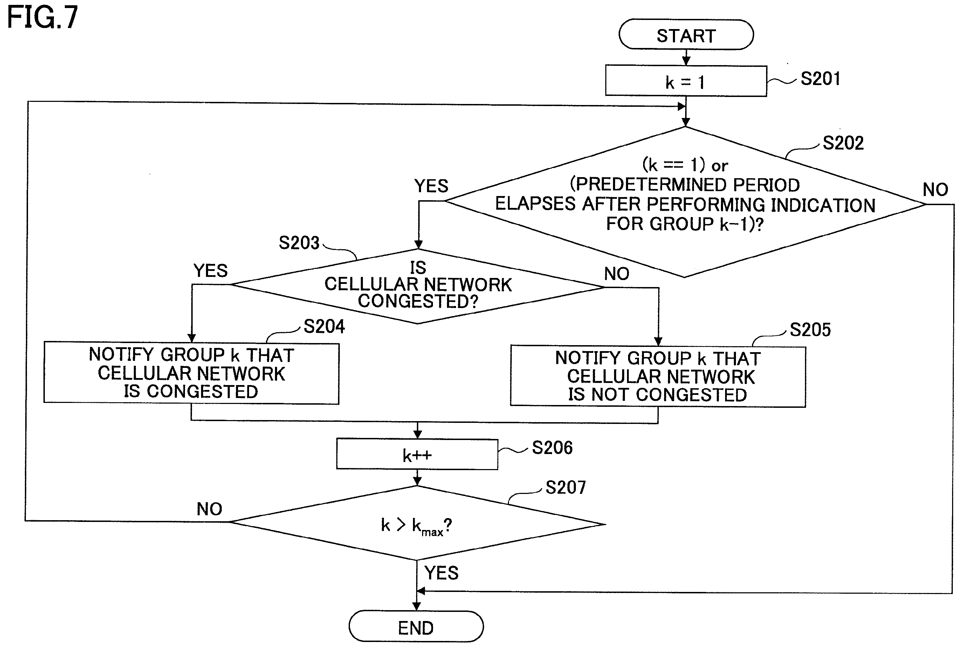

In the operation example shown in Fig. 6, although both of the congestion level of the cellular network and the congestion level of the radio LAN network are considered, notification control may be performed by considering only the congestion level of the cellular network. The process of this case is described with reference to Fig. 7

First, the notification control unit 106 of the base station eNB sets k=1 to make group 1 to be a target (step 201). The notification control unit 106 determines whether k is 1, or whether a predetermined period has elapsed after performing notification to group k-1 (group of previous time) (step 202). When the determination result of step 202 is No, process of this time ends, and for example, determination of step 202 is performed again after a period of time.

In a case where the determination result in step 202 is Yes, the notification control unit 106 determines whether the cellular network is congested (step 203). In the example shown in Fig. 7, the notification control unit 106 obtains a congestion level of the cellular network from the cellular network congestion state management unit 103, compares the congestion level with a predetermined threshold, and determines that the cellular network is congested when the congestion level is equal to or greater than the predetermined threshold, and determines that the cellular network is not congested when the congestion level is not equal to or greater than the predetermined threshold.

Also, a threshold for determining that a network is not congested (is free) may be set to be smaller than a threshold for determining that the network is congested, and, the notification control unit 106 may determine that the network is not congested (is free) when the congestion level is smaller than the threshold. In this case, a state corresponding to neither of congested nor not-congested (free) may occur. In such a case, the process of this time may end and the process may return to step 202.

In a case where determination in step 203 is Yes, the cellular network is determined to be congested, and the process goes to step 204. In step 204, the notification control unit 106 notifies user apparatuses UE belonging to group k, via the DL signal transmission unit 101, of information indicating that the cellular network is congested. The user apparatuses UE belonging to group k that receive the information performs transition to the radio LAN network if the user apparatuses UE are connected to the cellular network. In step 204, the user apparatus UE may obtain congestion state information in the radio LAN network, and, when the radio LAN network is congested, the user apparatus UE may not perform transition to the radio LAN network.

When the determination in step 203 is No (when it is determined that the cellular network is not congested), the process goes to step 205.

In step 205, the notification control unit 106 notifies user apparatuses UE belonging to group k of information indicating that the cellular network is not congested (or information indicating that the cellular network is free). The user apparatuses UE belonging to group k that receive the information perform transition to the cellular network if the user apparatuses UE are connected to the radio LAN network.

In step 206 following steps 204 and 205, k is incremented. If k exceeds kₘₐₓ, the process ends, and if k does not exceed kₘₐₓ, the process returns to step 202 (step 207).

As mentioned above, according to the present embodiment, there is provided a base station for performing communication with a user apparatus that includes a function for switching connection between a first radio communication network and a second radio communication network, including: a group management unit (example: UE group management unit 104) configured to group a plurality of user apparatuses located in an area of the base station into a plurality of groups; and a notification control unit (example: notification control unit 106) configured to transmit congestion state information indicating a congestion state in the first radio communication network for each group that is grouped by the group management unit, and to cause each group to perform connection switching between the first radio communication network and the second radio communication network.

For example, when the notification control unit determines that the first radio communication network is congested based on a predetermined condition, the notification control unit transmits, for each group, congestion state information indicating that the first radio communication network is congested, and causes each group to perform connection switching from the first radio communication network to the second radio communication network. Also, for example, when the notification control unit determines that the first radio communication network is not congested based on a predetermined condition, the notification control unit transmits, for each group, congestion state information indicating that the first radio communication network is not congested, and causes each group to perform connection switching from the second radio communication network to the first radio communication network.

According to the above-mentioned configurations, for example, when the cellular network is congested, or when the cellular network is becoming free, user apparatuses UE can be gradually switched from the cellular network to the radio LAN network, or from the radio LAN network to the cellular network. Thus, mass toggle problem can be avoided.

Also, the notification control unit may be configured such that, when a congestion state in the second radio communication network satisfies a predetermined condition, the notification control unit transmits, for each group, congestion state information indicating a congestion state in the first radio communication network. Accordingly, by considering both of a congestion state in a transition source and a congestion state in a transition destination, a control can be performed in which, user apparatuses are not caused to perform transition when a transition destination is congested, for example.

Further, for example, the group management unit may group the plurality of user apparatuses based on predetermined priority, so that the notification control unit transmits, to each group, congestion state information in an order corresponding to the priority. Accordingly, by transmitting congestion state information to each group according to priority, it becomes possible, for example, to cause user apparatuses UE, that should be switched from the cellar network to the radio LAN network quickly, to perform switching preferentially.

### (Second embodiment)

Next, a second embodiment of the present invention is described. The system configuration of the present embodiment is the same as that of the first embodiment, and is as shown in Fig. 2. In the present embodiment, for example, the base station eNB notifies user apparatuses UE of a congestion state (to be referred to as congestion level hereinafter) and the like of the cellular network and the radio LAN network by using notification information and the like.

Also, each user apparatus UE is notified of thresholds on congestion levels of the cellular network and the radio LAN network, and each user apparatus UE has these thresholds. In the following, X indicates a threshold in the radio LAN network side, and Y indicates a threshold in the cellular network side. By the way, these thresholds may be notified from the base station eNB or may be notified from a predetermined server. For example, as these thresholds, values sent by ANDSF (Access Network Discovery & Selection Function) may be used.

The user apparatus UE determines either one of the radio LAN network and the cellular network as a destination to which U-plane data is to be transmitted (that is, determines which to connect to) based on the congestion level of the radio LAN network, the congestion level of the cellular network and a threshold notified of beforehand.

For example, when the congestion level of the radio LAN network falls below X and the congestion level of the cellular network side exceeds Y, the user apparatus UE switches to the radio LAN network side. Also, the user apparatus UE can perform control such that, even though the congestion level of the radio LAN network side exceeds X, when the congestion level of the cellular network side exceeds Y, the user apparatus continues to connect to the radio LAN network side.

In the present embodiment, individual hysteresis is provided for each group of user apparatuses UE in the above-mentioned controls. The number of the user apparatuses UE included in the group is one or more. More particularly, there are following example 1 and example 2.

### (Example 1) Providing a hysteresis of congestion state

For example, in user apparatuses UE of a group, Hys1 is set as a hysteresis of the radio LAN network side, and Hys2 is set as a hysteresis of the cellular network side, and the user apparatuses UE of the group are notified of these hystereses beforehand. Also, the user apparatuses UE are notified of X and Y beforehand.

As an example, when a congestion state in the radio LAN network side falls below X-Hys1 and a congestion state in the cellular network side exceeds Y+Hys2, the user apparatuses UE in the group switches to the radio LAN network side.

By setting Hys1 and/or Hys2 to be different for each group, transition can be performed gradually for each group.

### (Example 2) providing temporal hysteresis

In example 2, temporal hysteresis is provided, and control is performed such that, even if transition event is satisfied by a congestion state, transition is postponed for a predetermined period.

For example, in user apparatuses of a group, T is set as a temporal hysteresis, and the hysteresis is notified to user apparatuses UE of the group beforehand. Also, the user apparatuses UE are notified of X and Y beforehand.

As an example, even when a congestion state of the radio LAN network side falls below X and a congestion state of the cellular side exceeds Y, the user apparatuses UE do not perform transition immediately. The user apparatuses UE perform transition to the radio LAN network when the state continues for a period T. By setting T to be different values for each group, user apparatuses UE can be caused to perform transition gradually for each group.

The example 1 and the example 2 may be combined. For example, control can be performed such that, transition to the radio LAN network is performed only when the state, in which the condition for switching to the radio LAN network side is satisfied by determination in example 1, continues for the period T in example 2.

The "hysteresis" of the present embodiment may be referred to as "threshold adjustment value" since it is a value for adjusting a threshold.

### <Apparatus configuration example, process flow example>

In the present embodiment, the main body that notifies user apparatuses UE of a hysteresis is not limited to any particular things. For example, it may be notified from a given server, or may be notified from the base station eNB. That is, the user apparatus UE may receive the hysteresis from the cellular network, or may receive the hysteresis from the radio LAN network. The same applies to the before-mentioned threshold. The user apparatus UE may receive the threshold from the cellular network, or may receive the threshold from the radio LAN network.

Also, the main body that notifies user apparatuses UE of congestion levels of the cellular network and the radio LAN network is not limited to any particular things. For example, they may be notified from a given server, or may be notified from the base station eNB. That is, the user apparatus UE may receive the congestion levels of the cellular network and the radio LAN network from the cellular network, or may receive the congestion levels of the cellular network and the radio LAN network from the radio LAN network.

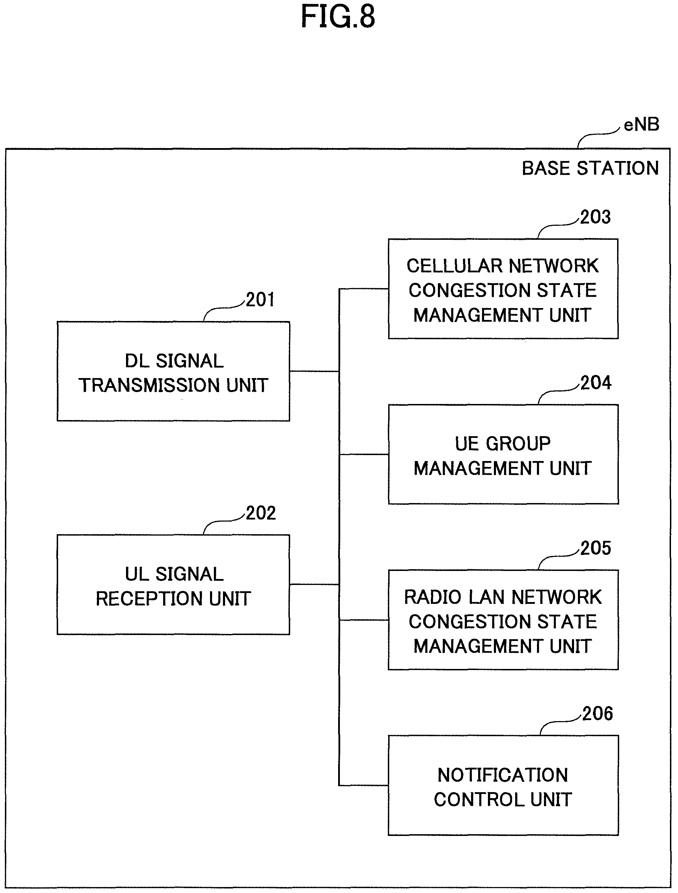

Fig. 8 shows a functional block diagram of the base station eNB in a case where the base station eNB transmits hysteresis and congestion levels of the cellular network and the radio LAN network.

As shown in Fig. 8, the base station eNB includes a DL signal transmission unit 201, an UL signal reception unit 202, a cellular network congestion state management unit 203, a UE group management unit 204, a radio LAN network congestion state management unit 205 and a notification control unit 206. Fig. 8 shows only functional units that are especially related to the embodiment of the present invention, and also includes at least functions, not shown in the figure, for performing operation complying with the communication scheme of the cellular network (example: LTE scheme).

The DL signal transmission unit 201 includes a function for generating various signals of physical layer from upper layer information to be transmitted from the base station eNB, and transmitting the various signals to user apparatuses UE. The UL signal reception unit 202 includes a function for receiving various uplink signals from user apparatuses UE, and obtaining upper layer information from the received physical layer signals.

The cellular network congestion state management unit 203 includes a functional unit configured to calculate a congestion level of the cellular network, and a storage unit configured to store the information of the congestion level. As described before, the congestion level is, for example, the number of user apparatuses UE in RRC connected state, the number of bearers that are established, Non-DRX ratio (ratio of user apparatuses UE that are not in DRX (discontinuous reception) state), the setting number of UL individual resource (the number of user apparatuses UE to which UL individual resource is assigned), or the like.

The radio LAN network congestion state management unit 205 includes a functional unit configured to receive a congestion level of the radio LAN network from the radio LAN network via a core network and the like, and a storage unit configured to store information of the congestion level.

The UE group management unit 204 includes a functional unit configured to group user apparatuses UE, that are located in an area of the base station eNB, arbitrarily or by the method based on priority as described in the first embodiment, and includes a storage unit configured to assign hysteresis to each grouped user apparatus UE and to store the hysteresis for each group.

The notification control unit 206 performs control of transmitting hysteresis for each group of user apparatuses UE grouped in the UE group management unit 206, and control of transmitting congestion levels, to each user apparatus UE, that are managed in the cellular network congestion state management unit 203 and the radio LAN network congestion state management unit 205.

The UE group management unit 204 can determine a hysteresis according to priority for switching from the cellular network to the radio LAN network. For example, in the example 1, Hys1 and Hys2 are set to be small for a group of high priority for switching from the cellular network to the radio LAN network (a group that is desired to be switched from the cellular network to the radio LAN network preferentially), and Hys1 and Hys2 are set to be large for a group of low priority for switching from the cellular network to the radio LAN network.

Also, in the example 2, T is set to be small for a group of high priority for switching from the cellular network to the radio LAN network (a group that is desired to be switched from the cellular network to the radio LAN network preferentially), and T is set to be large for a group of low priority for switching from the cellular network to the radio LAN network.

Also, the notification control unit 206 may be provided with a function for notifying user apparatuses UE of a threshold (before-mentioned X, Y). Also, the notification control unit 206 may be provided with a function for notifying user apparatuses UE of a threshold (such as X-Hys1, Y+Hys2 to be referred to as "adjusted threshold") adjusted by the hysteresis for each group. In the latter case, the user apparatuses UE perform comparison with the congestion level by using the adjusted threshold received from the base station eNB.

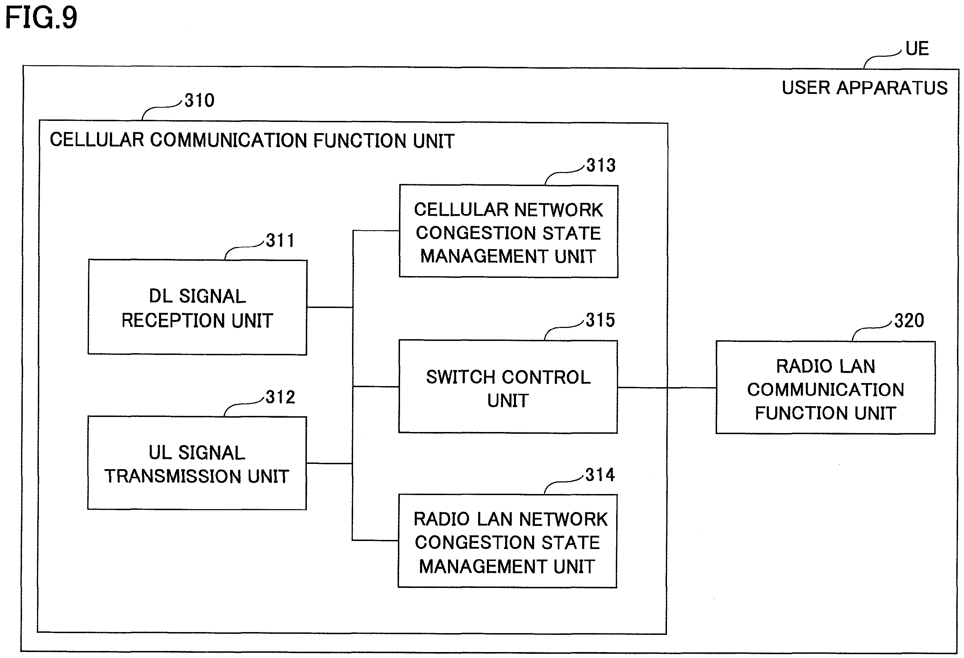

Fig. 9 shows a functional configuration example of the user apparatus UE of the present embodiment. The example shown in Fig. 9 is an example when receiving both of the congestion level and the hysteresis from the base station eNB.

As shown in Fig. 9, the user apparatus UE includes a cellular communication function unit 310 and a radio LAN communication function unit 320. The cellular communication function unit 310 includes a DL signal reception unit 311, an UL signal transmission unit 312, a cellular network congestion state management unit 313, a radio LAN network congestion state management unit 314 and a switch control unit 315. Fig. 9 shows only functional units that are especially related to the present invention in the user apparatus UE, and also includes at least functions, not shown in the figure, for performing operation complying with the cellular scheme such as the LTE scheme.

The cellular communication function unit 310 is a function unit configured to perform radio communication by the cellular scheme (example: LTE), and the radio LAN communication function unit 320 is a function unit configured to perform communication by radio LAN.

The DL signal reception unit 311 in the cellular communication function unit 310 includes a function for receiving various downlink signals from the base station eNB, and obtaining upper layer information from the received physical layer signals, and the UL signal transmission unit 312 includes a function for generating various signals of physical layer from upper layer information to be transmitted from the user apparatus UE, and transmitting the various signals to the base station eNB.

The cellular network congestion state management unit 313 includes a functional unit configured to receive a congestion level of the cellular network from the base station eNB via the DL signal reception unit 311, and a storage unit configured to store the received congestion level. The congestion level stored in the storage unit is updated sequentially.

The radio LAN network congestion state management unit 314 includes a functional unit configured to receive a congestion level of the radio LAN network from the base station eNB via the DL signal reception unit 311, and a storage unit configured to store the received congestion level. The congestion level stored in the storage unit is updated sequentially.

The switch control unit 315 includes a storage unit configured to store a threshold (corresponding to before-mentioned X, Y) notified from the base station eNB and the like, and a hysteresis notified from the base station eNB and the like. Also, the switch control unit 315 includes a function for performing control of switching from the cellular network to the radio LAN network and switching from the radio LAN network to the cellular network based on the threshold, hysteresis, a congestion level of the cellular network and a congestion level of the radio LAN network managed in the cellular network congestion state management unit 313 and the radio LAN network congestion state management unit 314. As mentioned before, the switch control unit 315 may receive, from the base station eNB and the like, a threshold (adjusted threshold) adjusted by the hysteresis, and store the threshold. In such a case, the switch control unit 315 perform comparison with a congestion level using the adjusted threshold.

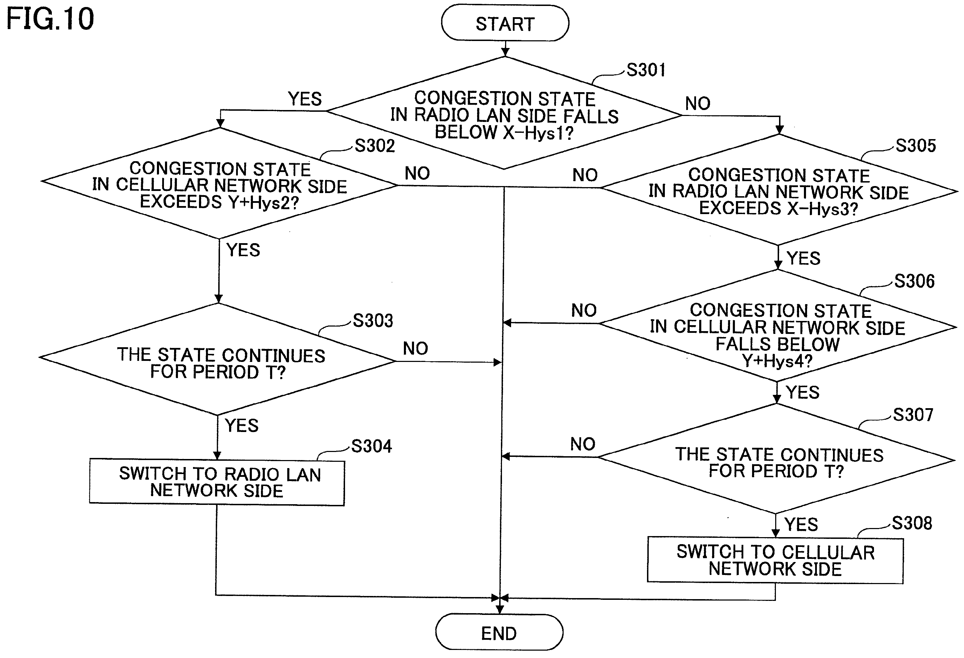

In the following, an operation example of the user apparatus UE configured as shown in Fig. 9 is described with reference to Fig. 10. In this example, before-mentioned X and Y are used as thresholds, Hys1 and Hys3 are used as hystereses on the threshold in the radio LAN network side, Hys2 and Hys4 are used as hystereses on the threshold in the cellular network side, and T is used as temporal hysteresis descried in the example 2. Hys1 is greater than Hys3, and relationship between Hys2 and Hys4 is arbitrary. Also, Fig. 10 shows operation of one time in a transition determination process that is performed every constant time, for example.

In step 301, the switch control unit 315 of the user apparatus UE determines whether a congestion level of the radio LAN network side falls below (is less than) X-Hys1. When the congestion level of the radio LAN network side falls below X-Hys1 (Yes in step 301), the process goes to step 302, and the switch control unit 315 of the user apparatus UE determines whether the congestion level of the cellular network side exceeds Y+Hys2. In a case where determination in step 302 becomes No, the process ends, and in a case where the determination becomes Yes, the process goes to step 303.

In step 303, the switch control unit 315 of the user apparatus UE determines whether the current state (state in which step 301 and 302 are Yes) continues for the period T. When the determination in step 303 is No, the process ends, and when the determination is Yes, the process goes to step 304. In step 304, the switch control unit 315 of the user apparatus UE performs transition from the cellular network to the radio LAN network when the user apparatus UE is currently connected to the cellular network.

In step 301, in a case where the congestion level of the radio LAN network side is equal to or greater than X-Hys1 (No in step 301), the process goes to step 305, and the switch control unit 315 of the user apparatus UE determines whether the congestion level of the radio LAN network side exceeds X-Hys3. When the determination in step 305 becomes No, the process ends, and when the determination becomes Yes, the process goes to step 306.

In step 306, the switch control unit 315 of the user apparatus UE determines whether the congestion level of the cellular network side falls below Y+Hys4. When the determination in step 306 is No, the process ends, and when the determination is Yes, the process goes to step 307.

In step 307, the switch control unit 315 of the user apparatus UE determines whether the current state (state in which step 301 is No, and steps 305 and 306 are Yes) continues for the period T. When the determination in step 307 is No, the process ends, and when the determination is Yes, the process goes to step 308. In step 308, the switch control unit 315 of the user apparatus UE performs transition from the radio LAN network to the cellular network when the user apparatus UE is currently connected to the radio LAN network.

Although the example shown in Fig. 10 is an example in which Hys for the threshold and temporal T are used, only one of them may be used.

As mentioned above, according to the present embodiment, there is provided a user apparatus that includes a function for performing connection switching between a first radio communication network and a second radio communication network, including:
a congestion state management unit (example: cellular network congestion state management unit 313 and radio LAN network congestion state management unit 314) configure to receive, from the first radio communication network or the second radio communication network, a first congestion level indicating a congestion level of the first radio communication network and a second congestion level indicating a congestion level of the second radio communication network; and
a switch control unit (example: switch control unit 315) configured to hold a first threshold on the first congestion level and a second threshold on the second congestion level, compare the first threshold adjusted by a predetermined first threshold adjusting value with the first congestion level, and compare the second threshold adjusted by a predetermined second threshold adjusting value with the second congestion level, so as to determine whether to perform connection switching between the first radio communication network and the second radio communication network.

Also, according to the present embodiment, there is provided a user apparatus that includes a function for performing connection switching between a first radio communication network and a second radio communication network, including:
a congestion state management unit (example: cellular network congestion state management unit 313 and radio LAN network congestion state management unit 314) configure to receive, from the first radio communication network or the second radio communication network, a first congestion level indicating a congestion level of the first radio communication network and a second congestion level indicating a congestion level of the second radio communication network; and
a switch control unit (example: switch control unit 315) configured to compare a predetermined first threshold with the first congestion level, and compare a predetermined second threshold with the second congestion level, so as to perform connection switching between the first radio communication network and the second radio communication network when determining that a condition to perform the connection switching is satisfied and when the condition continues for a predetermined period.

As described above, each user apparatus UE performs comparison with a threshold by considering a hysteresis (first threshold adjusting value, second adjusting value, predetermined period) that is set individually, so that user apparatuses UE can be gradually switched from the cellular network to the radio LAN network, or from the radio LAN network to the cellular network. Thus, mass toggle problem can be avoided.

In the above, the present invention has been explained while referring to the specific embodiments. However, the disclosed invention is not limited to the embodiments. Those skilled in the art will conceive of various modified examples, corrected examples, alternative examples, substituted examples, and the like. While specific numerical value examples are used to facilitate understanding of the present invention, such numerical values are merely examples, and any appropriate value may be used unless specified otherwise. Classification into each item in the description is not essential in the present invention, and features described in two or more items may be combined and used as necessary. Subject matter described in an item may be applied to subject matter described in another item (provided that they do not contradict).

It is not always true that the boundaries of the functional units or the processing units in the functional block diagram correspond to boundaries of physical components. The operations by the plural functional units may be physically performed by a single component. Alternatively, the operations by the single functional unit may be physically performed by plural components.

For convenience of explanation, the user apparatus UE and the base station eNB have been explained by using functional block diagrams. However, each apparatus may be implemented in hardware, software, or a combination thereof. The software that operates according to the present invention (software executed by a processor provided in the user apparatus UE, software executed by a processor provided in the base station eNB) may be stored in any proper storage medium such as a Random Access Memory (RAM), a flash memory, a Read Only Memory (ROM), an EPROM, an EEPROM, a register, a hard disk (HDD), a removable disk, a CD-ROM, a database, a server and the like.

The present invention is not limited to the above-mentioned embodiment and is intended to include various variations, modifications, alterations, substitutions and so on without departing from the spirit of the present invention.

The present international application claims priority based on Japanese patent application No. 2013-116427, filed in the JPO on May 31, 2013, and the entire contents of the Japanese patent application No. 2013-116427 are incorporated herein by reference.

### DESCRIPTION OF REFERENCE SIGNS

eNB base station
UE user apparatus
101, 201 DL signal transmission unit
102, 202 UL signal reception unit
103, 203 cellular network congestion state management unit
104, 204 UE group management unit
105, 205 radio LAN network congestion state management unit
106, 206 notification control unit
310 cellular communication function unit
320 radio LAN function unit
311 DL signal reception unit
312 UL signal transmission unit
313 cellular network congestion state management unit
314 radio LAN network congestion state management unit
315 switch control unit

## Claims

1. A base station for performing communication with a user apparatus that includes a function for switching connection between a first radio communication network and a second radio communication network, comprising:
a group management unit configured to group a plurality of user apparatuses located in an area of the base station into a plurality of groups; and
a notification control unit configured to transmit congestion state information indicating a congestion state in the first radio communication network for each group that is grouped by the group management unit, and to cause each group to perform connection switching between the first radio communication network and the second radio communication network.

2. The base station as claimed in claim 1, wherein, when the notification control unit determines that the first radio communication network is congested based on a predetermined condition, the notification control unit transmits, for each group, congestion state information indicating that the first radio communication network is congested, and causes each group to perform connection switching from the first radio communication network to the second radio communication network.

3. The base station as claimed in claim 1 or 2, wherein, when the notification control unit determines that the first radio communication network is not congested based on a predetermined condition, the notification control unit transmits, for each group, congestion state information indicating that the first radio communication network is not congested, and causes each group to perform connection switching from the second radio communication network to the first radio communication network.

4. The base station as claimed in any one of claims 1-3, wherein, when a congestion state in the second radio communication network satisfies a predetermined condition, the notification control unit transmits, for each group, congestion state information indicating a congestion state in the first radio communication network.

5. The base station as claimed in any one of claims 1-4, wherein the group management unit groups the plurality of user apparatuses based on predetermined priority, and the notification control unit transmits, to each group, congestion state information in an order corresponding to the priority.

6. A user apparatus that includes a function for performing connection switching between a first radio communication network and a second radio communication network, comprising:
a congestion state management unit configured to receive, from the first radio communication network or the second radio communication network, a first congestion level indicating a congestion level of the first radio communication network and a second congestion level indicating a congestion level of the second radio communication network; and
a switch control unit configured to hold a first threshold on the first congestion level and a second threshold on the second congestion level, compare the first threshold adjusted by a predetermined first threshold adjusting value with the first congestion level, and compare the second threshold adjusted by a predetermined second threshold adjusting value with the second congestion level, so as to determine whether to perform connection switching between the first radio communication network and the second radio communication network.

7. A user apparatus that includes a function for performing connection switching between a first radio communication network and a second radio communication network, comprising:
a congestion state management unit configured to receive, from the first radio communication network or the second radio communication network, a first congestion level indicating a congestion level of the first radio communication network and a second congestion level indicating a congestion level of the second radio communication network; and
a switch control unit configured to compare a predetermined first threshold with the first congestion level, and compare a predetermined second threshold with the second congestion level, so as to perform connection switching between the first radio communication network and the second radio communication network when determining that a condition to perform the connection switching is satisfied and when the condition continues for a predetermined period.

8. A congestion state notification control method executed by a base station for performing communication with a user apparatus that includes a function for switching connection between a first radio communication network and a second radio communication network, comprising:
a grouping step of grouping a plurality of user apparatuses located in an area of the base station into a plurality of groups; and
a step of transmitting congestion state information indicating a congestion state in the first radio communication network for each group that is grouped by the grouping step, and causing each group to perform connection switching between the first radio communication network and the second radio communication network.

9. A switch control method executed by a user apparatus that includes a function for performing connection switching between a first radio communication network and a second radio communication network, comprising:
a step of receiving, from the first radio communication network or the second radio communication network, a first congestion level indicating a congestion level of the first radio communication network and a second congestion level indicating a congestion level of the second radio communication network; and
a step of obtaining a first threshold on the first congestion level and a second threshold on the second congestion level, comparing the first threshold adjusted by a predetermined first threshold adjusting value with the first congestion level, and comparing the second threshold adjusted by a predetermined second threshold adjusting value with the second congestion level, so as to determine whether to perform connection switching between the first radio communication network and the second radio communication network.

10. A switch control method executed by a user apparatus that includes a function for performing connection switching between a first radio communication network and a second radio communication network, comprising:
a step of receiving, from the first radio communication network or the second radio communication network, a first congestion level indicating a congestion level of the first radio communication network and a second congestion level indicating a congestion level of the second radio communication network; and
a step of comparing a predetermined first threshold with the first congestion level, and comparing a predetermined second threshold with the second congestion level, so as to perform connection switching between the first radio communication network and the second radio communication network when determining that a condition to perform the connection switching is satisfied and when the condition continues for a predetermined period.
